# FASCICULE DE BREVET EUROPEEN

(11) **EP 0 674 989 B1**
(45) Date de publication et mention de la délivrance du brevet: **03.06.1998**
(21) Numéro de dépôt: 95400680.5
(22) Date de dépôt: 28.03.1995
(51) Int. Cl.: B29D 11/00, B29C 65/68, B29C 33/00

(54) **Procédé pour la constitution d'un moule propre à l'obtention d'une lentille optique et moule correspondant ainsi obtenu**
Verfahren zur Bildung einer Giessform geeignet zur Herstellung einer optischen Linse und derart hergestellte Giessform
Process for the constitution of a mould suitable for obtaining an optical lens and corresponding mould so obtained

(30) Priorité: 29.03.1994 FR 9403655
(43) Date de publication de la demande: 04.10.1995
(73) Titulaire: ESSILOR INTERNATIONAL (Compagnie Générale d'Optique), F-94220 Charenton-le-Pont (FR)
(72) Inventeur: Cano, Jean-Paul, F-94370 Sucy en Brie (FR); Magne, Jean-François, F-94000 Creteil (FR); Wajs, Georges, F-94200 Ivry (FR)
(74) Mandataire: CABINET BONNET-THIRION

(56) Documents cités:
- FR-A- 973 216
- FR-A- 1 018 486
- FR-A- 2 667 819
- US-A- 3 568 311

## Description

La présente invention concerne d'une manière générale la constitution des moules mis en oeuvre pour l'obtention de lentilles optiques en matière synthétique thermodurcissable.

Elle vise plus particulièrement, mais non nécessairement exclusivement, le cas des moules pour lentilles ophtalmiques.

Pour l'essentiel, ces moules sont constitués de deux coquilles de moulage dont les surfaces internes en regard sont, en négatif, à l'image des surfaces recherchées pour la lentille optique à mouler.

Tant pour le réglage en distance de ces coquilles de moulage que pour l'étanchéité de la cavité de moulage qu'elles délimitent, il est nécessaire de prévoir, annulairement, entre ces coquilles de moulage, un élément de fermeture, qui, de surcroît, doit être à même de permettre à ces coquilles de moulage de suivre à la prise le retrait de la matière thermodurcissable moulée.

Le plus communément, à ce jour, cet élément de fermeture est un joint relativement épais, dans lequel s'emboîtent les coquilles de moulage.

Bien que donnant satisfaction, la mise en oeuvre de ce joint implique un certain nombre de sujétions, qui, pour l'essentiel, tiennent au fait qu'il faut le réaliser par avance, qu'il faut disposer, pour cette réalisation, d'une presse à injecter nécessitant un investissement non négligeable, que, pour satisfaire aux diverses conditions possibles d'utilisation, cette réalisation doit porter sur toute une gamme de joints différents répondant à des caractéristiques géométriques différentes, et, donc, qu'il faut ensuite assurer de manière dispendieuse un stockage important de tels joints.

En outre, le joint ainsi mis en oeuvre n'assure pas par lui-même un maintien suffisant des coquilles de moulage l'une par rapport à l'autre, dans la mesure où il ne fait que les contrebuter dans un sens.

Pour le maintien des coquilles de moulage dans le sens opposé au précédent, il faut, usuellement, prévoir, en sus, une pince, qui les enserre de l'extérieur.

La mise en oeuvre de l'ensemble s'en trouve compliquée d'autant.

Enfin, le joint est par lui-même assez rigide, ce qui en rend la manipulation relativement malaisée, et il soulève par lui-même des problèmes de recyclage.

Pour pallier ces inconvénients, il a été proposé, de longue date, de réaliser, à la demande, et en pratique au dernier moment, l'élément de fermeture, en constituant celui-ci d'un manchon de fermeture que l'on vient établir annulairement autour des deux coquilles de moulage après que celles-ci aient été dûment positionnées l'une par rapport à l'autre.

Plus précisément, il a été proposé, de longue date, de réaliser ce manchon de fermeture à l'aide d'une bande que l'on vient enrouler sur la tranche des coquilles de moulage.

Dans le brevet français No 973 216, il s'agit, par exemple, d'une bande de papier, et, dans le brevet français No 1 018 486, d'une bande en caoutchouc.

Dans l'un et l'autre cas, aucun stockage n'est avantageusement à prévoir, autre que celui d'un rouleau de la bande choisie.

A l'utilisation, celle-ci est en effet simplement coupée à la demande à la longueur nécessaire.

Mais, pour le maintien convenable des deux coquilles de moulage l'une par rapport à l'autre, il subsiste le problème d'une solidarisation suffisante du manchon de fermeture aux coquilles de moulage qu'il entoure.

Dans le brevet français No 973 216, il est proposé de procéder par collage.

Mais, avec un tel collage, la désolidarisation ultérieure des coquilles de moulage vis-à-vis du manchon de fermeture pour le démoulage de la lentille optique formée est en pratique malaisée.

En outre, cette désolidarisation laisse subsister, tant sur les coquilles de moulage que sur la lentille formée, des résidus de colle, qui, au moins en ce qui concerne les coquilles de moulage, doivent être éliminés, ce qui impose la mise en oeuvre d'une procédure de nettoyage spécifique.

Dans le brevet français No 1 018 486 il faut adjoindre des anneaux au manchon de fermeture pour son maintien, et, pour le maintien relatif des deux coquilles de moulage l'une par rapport à l'autre, il faut, en sus, lui associer des tiges et des éléments d'écartement, au prix d'une complexité non négligeable de la mise en oeuvre, tant en ce qui concerne l'assemblage préalable des coquilles de moulage qu'en ce qui concerne leur désolidarisation ultérieure.

Plus récemment, il a été proposé, notamment par la demande de brevet japonais publiée sous le No 55-105519, de former le manchon de fermeture à l'aide d'une bande adhésive.

Outre que, avec une telle bande adhésive, il subsiste, comme précédemment, sur les coquilles de moulage, après la désolidarisation de celles-ci, des résidus de colle qu'il convient ensuite d'éliminer, il importe soit que la bande adhésive ait une largeur inférieure à la hauteur globale des coquilles de moulage, ce qui peut conduire à une limitation de son emprise sur celles-ci au détriment de leur maintien, soit que, si cette largeur est supérieure à cette hauteur, la largeur en surplus de la bande adhésive, c'est-à-dire la largeur de cette bande adhésive dépassant de l'une et/ou de l'autre des coquilles de moulage, soit, pour des raisons de propreté, éliminée.

A défaut, la partie ainsi en surplus de la bande adhésive ne manquerait pas de retenir intempestivement des poussières ou d'autres salissures de ce type.

La présente invention a d'une manière générale pour objet une disposition permettant d'éviter l'ensemble de ces inconvénients.

De manière plus précise, elle a tout d'abord pour objet un procédé pour la constitution d'un moule propre à l'obtention d'une lentille optique, ce procédé étant du genre suivant lequel on établit annulairement autour de deux coquilles de moulage un manchon de fermeture définissant avec celles-ci la cavité de moulage recherchée et étant d'une manière générale caractérisé en ce que on choisit pour matériau constitutif du manchon de fermeture une matière synthétique thermorétractable, et en ce que, par une opération de chauffage, on provoque la striction de ce manchon de fermeture sur les coquilles de moulage ; elle a encore pour objet le moule ainsi formé.

En bref, suivant l'invention, le manchon de fermeture mis en oeuvre est en matière synthétique thermorétractable, soit que ce manchon de fermeture soit formé in situ en enroulant une bande sur la tranche des coquilles de moulage, soit qu'il s'agisse d'un manchon de fermeture préformé, c'est-à-dire d'un manchon de fermeture formé par avance d'un tronçon de tube.

Dans l'un et l'autre cas, après rétraction, ce manchon de fermeture comporte, entre les coquilles de moulage, une zone rentrante, qui est plus ou moins accentuée suivant le processus mis en oeuvre, mais qui suffit de toute façon à contrebuter dans un sens ces coquilles de moulage, et il forme, en continu, à chacune de ses extrémités, un rebord, qui est plaqué sur la surface externe des coquilles de moulage, et qui contrebute donc celles-ci dans le sens opposé au précédent.

Le maintien relatif l'une par rapport à l'autre des coquilles de moulage est ainsi fermement assuré, avec toute la rigidité souhaitable, par le manchon de fermeture qui les enserre, ce qui, notamment, permet avantageusement une manutention du moule suivant l'invention après sa constitution, si une telle manutention est nécessaire entre cette constitution et le moulage ultérieur de la lentille optique à former.

En outre, la désolidarisation des coquilles de moulage après un tel moulage se fait aisément, sans nécessiter un quelconque outillage particulier, et sans laisser de quelconques traces sur les coquilles de moulage.

Il est à souligner, en sus des observations déjà faites, que, dans le brevet français No 1 018 486, la déformation du manchon de fermeture en service est due à la seule aspiration induite par le retrait du matériau moulé lors de sa polymérisation, alors que, dans le cas du présent manchon de fermeture en matériau thermorétractable, elle est provoquée par la striction dont est l'objet au chauffage ce dernier matériau.

Dans le brevet américain No 3 568 311, qui ne concerne d'ailleurs pas la constitution d'un moule, mais celui d'une entretoise, le matériau constitutif de celle-ci n'est pas un matériau thermorétractable, mais, au contraire, un matériau qui, sous l'effet de la chaleur, est l'objet d'une expansion supérieure à celle résultant de la seule dilatation thermique.

En outre, cette entretoise est pré-étirée, et c'est par effet de mémoire qu'elle tend à reprendre sa configuration initiale au chauffage.

Il n'y a rien de tel avec l'objet de la présente invention.

Les caractéristiques et avantages de l'invention ressortiront d'ailleurs de la description qui va suivre, à titre d'exemple, en référence aux dessins schématiques annexés sur lesquels :
la figure 1 est une vue en perspective illustrant l'une des phases du procédé de constitution d'un moule suivant l'invention ;
la figure 2 est, suivant la ligne II-II de la figure 1, une vue en coupe correspondant à cette phase de ce procédé ;
la figure 3 est, suivant la flèche de la figure 3, une vue en plan se rapportant à une phase ultérieure du procédé suivant l'invention ;
la figure 4 est une vue en perspective du moule obtenu au terme du procédé suivant l'invention ;
la figure 5 est une vue en coupe axiale de ce moule, suivant la ligne V-V de la figure 4 ;
la figure 6 est une vue en perspective analogue à celle de la figure 1, pour une variante de réalisation ;
la figure 7 est une vue en plan analogue à celle de la figure 3, pour une autre variante de réalisation ;
la figure 8 est une vue en coupe axiale analogue à celle de la figure 2, pour une autre variante de réalisation ;
la figure 9 est, suivant la flèche IX de la figure 8, une vue en plan relative à l'une des phases du procédé conduisant à cette variante de réalisation ;
la figure 10 est une vue en coupe axiale analogue à celle de la figure 8, pour le moule obtenu au terme de ce procédé.

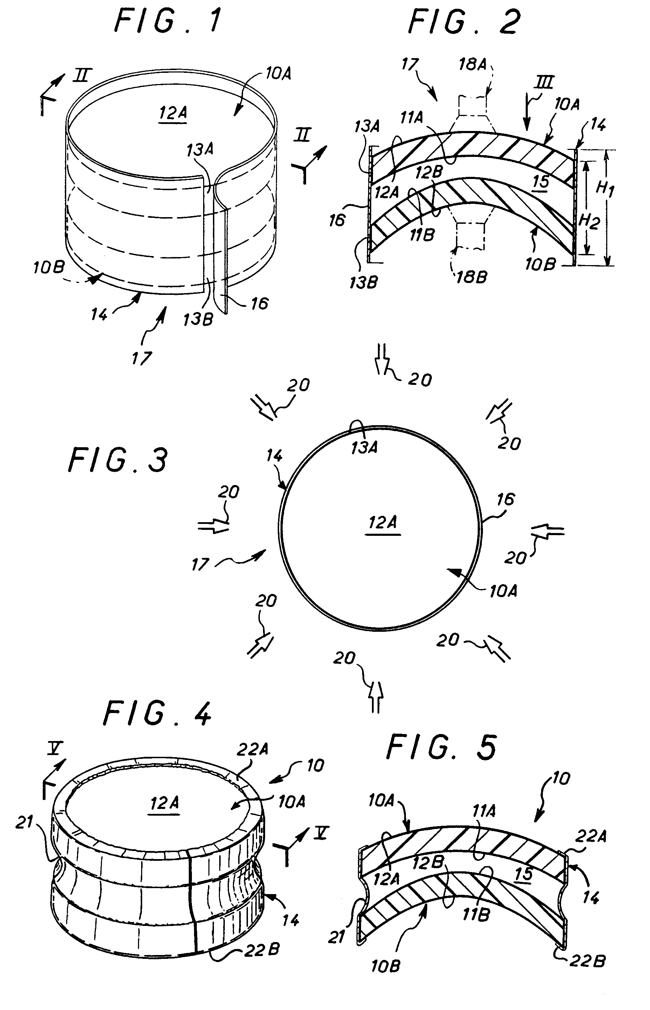

Les figures 1 à 5 concernent, à titre d'exemple, l'application de l'invention à la constitution d'un moule 10 propre à l'obtention d'une lentille optique concave, et, donc, divergente, non représentée.

De manière connue en soi, ce moule 10 est pour l'essentiel constitué de deux coquilles de moulage 10A, 10B, qui, prises individuellement, sont chacune sensiblement équi-épaisses, et qui, périphériquement, ont un même contour circulaire.

Ces deux coquilles de moulage 10A, 10B sont disposées coaxialement l'une au-dessus de l'autre, leurs surfaces internes 11A, 11B en regard correspondant chacune respectivement aux surfaces recherchées pour la lentille optique à former.

Par exemple, et de manière usuelle, ces coquilles de moulage 10A, 10B sont en verre, et leurs surfaces externes 12A, 12B sont globalement sphériques.

Leurs tranches 13A, 13B, quant à elles sont globalement cylindriques.

De manière connue en soi, on établit, annulairement, autour de ces deux coquilles de moulage 10A, 10B, un manchon de fermeture 14, qui définit avec elles la cavité de moulage 15 recherchée, et qui, outre cette fonction, assure notamment le maintien des coquilles de moulage 10A, 10B l'une par rapport à l'autre.

Suivant l'invention, on choisit pour matériau constitutif du manchon de fermeture 14 une matière synthétique thermorétractable, et, par une opération de chauffage, on provoque la striction de ce manchon de fermeture 14 sur les coquilles de moulage 10A, 10B.

Par exemple, la matière synthétique thermorétractable choisie est du polychlorure de vinyle ou un polyester tel que par exemple le polybutylène-téréphtalate.

Elle est de toute façon choisie de manière à ne pas interférer, par exemple par migration, avec la matière thermodurcissable à mouler.

Suivant la forme de réalisation illustrée sur les figures 1 à 5, on forme in situ le manchon de fermeture 14, en enroulant une bande 16 sur la tranche 13A, 13B des coquilles de moulage 10A, 10B.

L'épaisseur de cette bande 16, et donc celle du manchon de fermeture 14 qu'elle forme, peut par exemple être comprise entre 20 et 200 microns.

En pratique, cette épaisseur dépend de la matière synthétique thermorétractable utilisée, et elle est choisie de manière à ce que le moule 10 obtenu in fine présente toute la rigidité souhaitée.

Préférentiellement, et pour des raisons qui apparaîtront ultérieurement, la largeur de la bande 16, et, donc, la hauteur H1 du manchon de fermeture 14, est choisie supérieure à la hauteur H2 globale des coquilles de moulage 10A, 10B mesurée de l'une à l'autre de leurs surfaces externes 12A, 12B, à la périphérie de celles-ci, de manière à ce que, initialement, le manchon de fermeture 14 s'étende axialement au-delà de l'une au moins des coquilles de moulage 10A, 10B.

En pratique, dans la forme de réalisation représentée, il est fait en sorte que, initialement, le manchon de fermeture 14 s'étende axialement au-delà de l'une et de l'autre des coquilles de moulage 10A, 10B, en faisant saillie tant sur la surface externe 12A de la coquille de moulage 10A que sur la surface externe 12B de la coquille de moulage 10B, à la périphérie de celles-ci.

Bien entendu, lors de l'établissement du manchon de fermeture 14, il convient d'assurer, au moins temporairement, un maintien relatif positif des coquilles de moulage 10A, 10B l'une par rapport à l'autre.

Par exemple, et tel que schématisé en traits interrompus sur la figure 2, on assure le maintien relatif de l'une au moins de ces coquilles de moulage 10A, 10B, et, en pratique, celui de chacune de celles-ci, par un organe de préhension 18A, 18B en prise de manière débrayable avec la zone centrale de leurs surfaces externes 12A, 12B.

Par exemple, les organes de préhension 18A, 18B ainsi mis en oeuvre sont des ventouses.

Après avoir enroulé la bande 16 sur la tranche 13A, 13B des coquilles de moulage 10A, 10B, on solidarise l'une à l'autre les deux extrémités de cette bande 16, de manière à fermer la cavité de moulage 15.

Par exemple, on soude localement ces deux extrémités, en appliquant à la bande 16 un couteau chauffant, non représenté, perpendiculairement aux tranches 13A, 13B des coquilles de moulage 10A, 10B.

L'opération de chauffage ensuite nécessaire à la striction, sur les coquilles de moulage 10A, 10B, du manchon de fermeture 14 ainsi formé, peut par exemple être assurée, tel que schématisé à la figure 3, à l'aide d'une pluralité de buses 20, qui, convenablement réparties circulairement autour du sous-ensemble 17 correspondant, sont dirigées radialement vers ce sous-ensemble 17, pour soufflage d'un fluide chaud, en pratique de l'air, sur celui-ci.

Après cette opération de chauffage, le manchon de fermeture 14 est dûment rétracté.

Il comporte alors, annulairement, en conséquence, entre les coquilles de moulage 10A, 10B, une zone rentrante 21, plus ou moins accentuée, et, conjointement, il forme, en continu, à chacune de ses extrémités, un rebord 22A, 22B plaqué sur la surface externe 12A, 12B de ces coquilles de moulage 10A, 10B.

Les coquilles de moulage 10A, 10B se trouvent ainsi dûment enserrées par le manchon de fermeture 14, tant du côté de leurs surfaces internes 11A, 11B que du côté de leurs surfaces externes 12A, 12B.

Compte tenu de la rigidité de l'ensemble, l'épaisseur des coquilles de moulage 10A, 10B peut avantageusement être relativement faible, en étant par exemple de l'ordre de 2 mm.

Dans la forme de réalisation représentée, qui convient particulièrement pour le moulage de lentilles concaves, le bord périphérique de celles-ci étant relativement épais, et, donc, relativement grande la distance séparant l'une de l'autre les coquilles de moulage 10A, 10B à leur périphérie, la zone rentrante 21 que forme le manchon de fermeture 14 a, en section transversale, un profil en arc de cercle, et elle est relativement peu accentuée.

Mais elle s'avère suffisante.

Suivant des dispositions décrites plus en détail ultérieurement pour le moulage de lentilles convexes, elle peut cependant être plus accentuée si nécessaire.

Pour l'introduction de la matière de moulage dans la cavité de moulage 15, il suffit, de manière usuelle, d'intervenir localement à travers le manchon de fermeture 14, à la faveur de sa zone rentrante 21, en perçant un trou dans celle-ci.

Le trou correspondant est ensuite rebouché, par exemple à l'aide d'un morceau de bande adhésive.

Quoi qu'il en soit, les essais montrent que l'étanchéité assurée par le manchon de fermeture 14 dans le moule 10 suivant l'invention est suffisante pour assurer une retenue convenable de la matière de moulage, même si le remplissage de ce moule 10 intervient quelque temps après sa réalisation.

De manière usuelle, la polymérisation de la matière de moulage peut être assurée thermiquement ou par irradiation, notamment aux rayons U.V.

Pour le démoulage, c'est-à-dire pour la désolidarisation l'une par rapport à l'autre des coquilles de moulage 10A, 10B, il suffit d'arracher le manchon de fermeture 14.

Le manchon de fermeture 14 ne laisse alors avantageusement aucune trace ni sur les coquilles de moulage 10A, 10B ni sur la lentille optique formée.

Toutes les opérations qui précèdent peuvent être assurées manuellement.

Elles peuvent également être assurées mécaniquement, sur une machine.

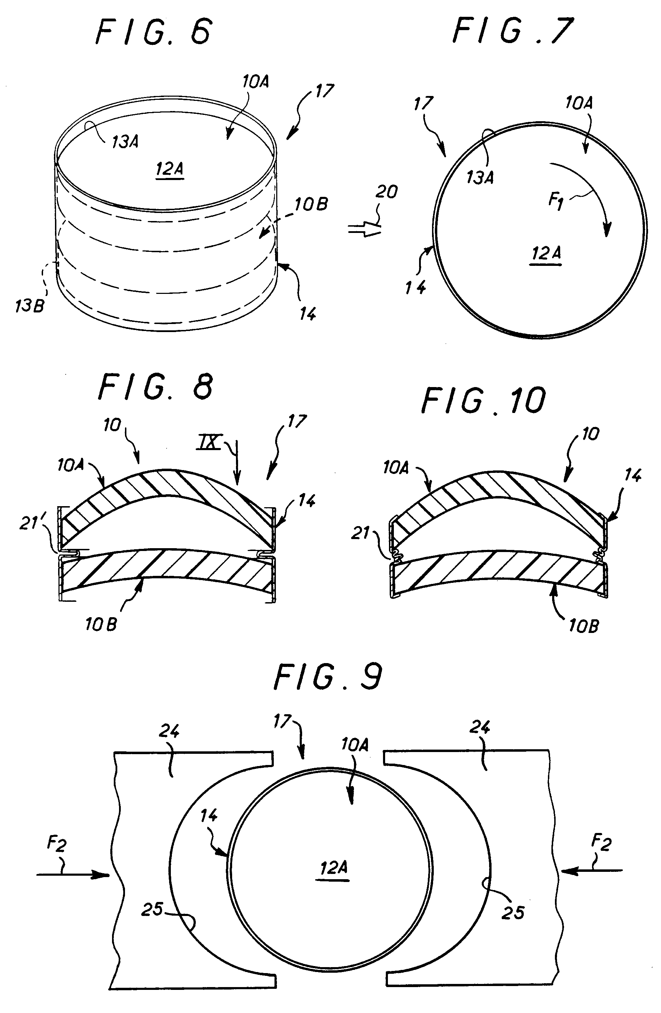

Dans la variante de réalisation représentée à la figure 6, on choisit, pour manchon de fermeture 14, un manchon de fermeture 14 formé par avance d'un tronçon de tube que l'on glisse autour des coquilles de moulage 10A, 10B.

Autrement dit, ce manchon de fermeture 14 est, dans ce cas, dès l'origine, un tronçon de tube, dûment découpé à la hauteur nécessaire.

Dans la variante de réalisation illustrée par la figure 7, l'opération de chauffage est conduite à l'aide d'une seule buse 20.

Le sous-ensemble 17 que constitue avec les coquilles de moulage 10A, 10B le manchon de fermeture 14 est alors entraîné en rotation autour de son axe au droit de cette buse 20, tel que schématisé par la flèche F1 sur cette figure 7.

Les figures 8 à 10 se rapportent à une variante de réalisation du procédé suivant l'invention appliquée, à titre d'exemple, au cas où la lentille optique à former est une lentille convexe, c'est-à-dire une lentille convergente.

Les coquilles de moulage 10A, 10B sont dans ce cas relativement proches l'une de l'autre à leur périphérie.

Il peut être souhaitable, dans un tel cas, de faire précéder l'opération de chauffage par une opération de formage conduisant le manchon de fermeture 14 à former annulairement par avance entre ces coquilles de moulage 10A, 10B une zone rentrante 21'.

Dans la forme de réalisation représentée, il est fait en sorte que cette zone rentrante 21' forme transversalement un repli en U pour le manchon de fermeture 14.

Par exemple, et tel que schématisé par la figure 9, la zone rentrante 21' est obtenue en venant enserrer le manchon de fermeture 14 par deux demi-couteaux chauffants 24, qui ont chacun une arête d'attaque 25 hémi-circulaire, et qui sont déplacés l'un en direction de l'autre suivant les flèches opposées F2 de cette figure 9.

Après rétraction du manchon de fermeture 14 sur les coquilles de moulage 10A, 10B, figure 10, la zone rentrante 21 obtenue pour ce manchon de fermeture 14 entre les coquilles de moulage 10A, 10B a avantageusement tout le développement nécessaire pour le maintien convenable de celles-ci, malgré la faible distance les séparant à leur périphérie.

Ainsi qu'on le notera, cette zone rentrante 21 ménage aussi extérieurement, entre les coquilles de moulage 10A, 10B, un espace libre, qui, par l'usage par exemple d'une spatule, est de nature à faciliter la désolidarisation de ces coquilles de moulage 10A, 10B l'une par rapport à l'autre après le moulage, malgré, comme précédemment, la faible distance qui les sépare à leur périphérie.

Bien entendu, la présente invention ne se limite pas aux formes de réalisation décrites et représentées, mais englobe toute variante d'exécution et/ou de combinaison de leurs divers éléments.

En particulier, lorsqu'une bande est mise en oeuvre pour la constitution du manchon de fermeture suivant l'invention, cette bande peut, le cas échéant, s'étendre sur plus d'un tour.

## Revendications

1. Procédé pour la constitution d'un moule propre à l'obtention d'une lentille optique, du genre suivant lequel on établit annulairement autour de deux coquilles de moulage (10A, 10B) un manchon de fermeture (14) définissant avec celles-ci la cavité de moulage (15) recherchée, caractérisée en ce que on choisit pour matériau constitutif du manchon de fermeture (14) une matière synthétique thermorétractable, et en ce que, par une opération de chauffage, on provoque la striction de ce manchon de fermeture (14) sur les coquilles de moulage (10A, 10B).

2. Procédé suivant la revendication 1, caractérisé en ce que on fait en sorte que, initialement, le manchon de fermeture (14) s'étende axialement au-delà de l'une au moins des coquilles de moulage (10A, 10B).

3. Procédé suivant la revendication 2, caractérisé en ce que on fait en sorte que, initialement, le manchon de fermeture (14) s'étende axialement au-delà de l'une et de l'autre des coquilles de moulage (10A, 10B).

4. Procédé suivant l'une quelconque des revendications 1 à 3, caractérisé en ce que on fait précéder l'opération de chauffage par une opération de formage conduisant le manchon de fermeture (14) à former annulairement par avance entre les coquilles de moulage (10A, 10B) une zone rentrante (21').

5. Procédé suivant la revendication 4, caractérisé en ce que on fait en sorte que la zone rentrante (21') du manchon de fermeture (14) forme transversalement un repli en U pour celui-ci.

6. Procédé suivant l'une quelconque des revendications 1 à 5, caractérisé en ce que, lors de l'établissement du manchon de fermeture (14), on assure le maintien relatif de l'une au moins des coquilles de moulage (10A, 10B) par un organe de préhension (18A, 18B) en prise de manière débrayable avec la zone centrale de la surface externe (12A, 12B) de cette coquille de moulage (10A, 10B).

7. Procédé suivant l'une quelconque des revendications 1 à 6, caractérisé en ce que on forme in situ le manchon de fermeture (14) en enroulant une bande (16) sur la tranche (13A, 13B) des coquilles de moulage (10A, 10B).

8. Procédé suivant la revendication 7, caractérisé en ce que, après avoir enroulé la bande (16) sur la tranche (13A, 13B) des coquilles de moulage (10A, 10B), on solidarise l'une à l'autre ses deux extrémités.

9. Procédé suivant l'une quelconque des revendications 1 à 6, caractérisé en ce que on choisit pour manchon de fermeture (14) un manchon de fermeture (14) formé d'un tronçon de tube.

10. Moule pour l'obtention d'une lentille optique, du genre comportant deux coquilles de moulage (10A, 10B) réunies par un manchon de fermeture (14) définissant avec elles une cavité de moulage (15), caractérisé en ce que le manchon de fermeture (14) est en matière synthétique thermorétractable et est dûment rétracté.

11. Moule suivant la revendication 10, caractérisé en ce que, conjointement, le manchon de fermeture (14) comporte, entre les coquilles de moulage (10A, 10B), une zone rentrante (21), et il forme en continu, à chacune de ses extrémités, un rebord (22A, 22B) plaqué sur la surface externe (12A, 12B) des coquilles de moulage (10A, 10B).

12. Moule suivant l'une quelconque des revendications 10, 11, caractérisé en ce que le manchon de fermeture (14) est formé par une bande (16) enroulée sur la tranche (13A, 13B) des coquilles de moulage (10A, 10B).

13. Moule suivant la revendication 12, caractérisé en ce que les deux extrémités de la bande (16) formant le manchon de fermeture (14) sont solidarisées l'une à l'autre.

14. Moule suivant l'une quelconque des revendications 10, 11, caractérisé en ce que le manchon de fermeture (14) est formé d'un tronçon de tube.

## Claims

1. A process for making up a mould for producing an optical lens, of the kind which comprises establishing in an annular configuration around two mould shell portions (10A, 10B) a closure sleeve (14) which with the mould shell portions defines the required mould cavity (15), characterised in that the material selected to constitute the closure sleeve (14) is a heat-shrinkable synthetic material and that contraction of the closure sleeve (14) around the mould shell portions (10A, 10B) is caused by a heating operation.

2. A process according to claim 1 characterised in that the procedure is such that initially the closure sleeve (14) extends axially beyond one at least of the mould shell portions (10A, 10B).

3. A process according to claim 2 characterised in that the procedure is such that initially the closure sleeve (14) extends axially beyond both of the mould shell portions (10A, 10B).

4. A process according to any one of claims 1 to 3 characterised in that the heating operation is preceded by a shaping operation causing the closure sleeve (14) to form in advance in an annular configuration an inset zone (21') between the mould shell portions (10A, 10B).

5. A process according to claim 4 characterised in that the procedure is such that the inset zone (21') of the closure sleeve (14) transversely forms a U-shaped bend therein.

6. A process according to any one of claims 1 to 5 characterised in that, when establishing the closure sleeve (14), one at least of the mould shell portions (10A, 10B) is held in position relative thereto by a gripping member (18A, 18B) releasably engaged with the central zone of the outside surface (12A, 12B) of said mould shell portion (10A, 10B).

7. A process according to any one of claims 1 to 6 characterised in that the closure sleeve (14) is formed in situ by winding a strip (16) around the edges (13A, 13B) of the mould shell portions (10A, 10B).

8. A process according to claim 7 characterised in that, after the strip (16) has been wound around the edges (13A, 13B) of the mould shell portions (10A, 10B), its two ends are fixed to each other.

9. A process according to any one of claims 1 to 6 characterised in that the closure sleeve (14) selected is a closure sleeve (14) formed by a tube portion.

10. A mould for producing an optical lens, of the kind comprising two mould shell portions (10A, 10B) which are connected by a closure sleeve (14) defining with them a mould cavity (15) characterised in that the closure sleeve (14) is of heat-shrinkable synthetic material and is duly shrunk.

11. A mould according to claim 10 characterised in that at the same time between the mould shell portions (10A, 10B) the closure sleeve (14) comprises an inset zone (21) and at each of its ends it continuously forms a rim (22A, 22B) which bears against the outside surface (12A, 12B) of the mould shell portions (10A, 10B).

12. A mould according to either one of claims 10 and 11 characterised in that the closure sleeve (14) is formed by a strip (16) which is wound around the edges (13A, 13B) of the mould shell portions (10A, 10B).

13. A mould according to claim 12 characterised in that the two ends of the strip (16) forming the closure sleeve (14) are fixed to each other.

14. A mould according to either one of claims 10 and 11 characterised in that the closure sleeve (14) is formed by a tube portion.

## Patentansprüche

1. Verfahren zur Zusammensetzung einer Gießform zur der Herstellung einer optischen Linse, indem zwei Gußdauerformen (10A, 10B) ringförmig um eine Verschlußhülse (14) errichtet werden, mit denen die gesuchte Aufnahme definiert wird, **dadurch gekennzeichnet**, daß für das Material, aus dem die Verschlußhülse (14) besteht, ein synthetischer, wärmeschrumpfender Werkstoff gewählt wird, und daß durch einen Heizschritt das Einschnüren der Verschlußhülse (14) auf die Gußdauerformen (10A, 10B) erzielt wird.

2. Verfahren gemäß Anspruch 1, **dadurch gekennzeichnet,** daß veranlaßt wird, daß sich die Verschlußhülse (14) anfänglich über zumindest eine Gußdauerform (10A, 10B) in axialer Richtung ausdehnt.

3. Verfahren gemäß Anspruch 2, **dadurch gekennzeichnet**, daß veranlaßt wird, daß sich die Verschlulßhülse (14) anfänglich über die eine und die andere Gußdauerform (10A, 10B) in axialer Richtung ausdehnt.

4. Verfahren gemäß einem der Ansprüche 1-3, **dadurch gekennzeichnet**, daß vor dem Heizschritt ein Formungsschritt ausgeführt wird, der die Verschlußhülse (14) zur vorherigen Bildung eines Rückziehbereichs (21'), ringförmig zwischen den Gußdauerformen (10A, 10B), führt.

5. Verfahren gemäß Anspruch 4, **dadurch gekennzeichnet**, daß veranlaßt wird, daß der Rückziehbereich (21') der Verschlußhülse (14) in transversaler Richtung eine U-förmige Falte bildet.

6. Verfahren gemäß einem der Ansprüche 1-5, **dadurch gekennzeichnet**, daß zur Zeit der Erstellung der Verschlußhülse (14) die relative Halterung von zumindest einer Gußdauerform (10A, 10B) durch eine Greifeinrichtung (18A, 18B) in einer trennbaren Greifweise mit dem zentralen Bereich der Außenfläche (12A, 12B) der Gußdauerform (10A, 10B) gesichert ist.

7. Verfahren gemäß einem der Ansprüche 1-6, **dadurch gekennzeichnet**, daß die Verschlußhülse (14) in situ durch Wickeln eines Bandes (16) auf den Rand (13A, 13B) der Gußdauerformen (10A, 10B) gebildet ist.

8. Verfahren gemäß Anspruch 7, **dadurch gekennzeichnet**, daß nach dem Wickeln des Bandes (16) auf den Rand (13A, 13B) der Gußdauerformen das eine mit dem anderen seiner beiden Enden verbunden wird.

9. Verfahren gemäß einem der Ansprüche 1-6, **dadurch gekennzeichnet**, daß als Verschlußhülse (14) eine Verschlußhülse (14) gewählt wird, die aus einem Rohrabschnitt gebildet ist.

10. Gießform zur Herstellung einer optischen Linse umfassend zwei Gußdauerformen (10A, 10B), welche durch eine Verschlußhülse (14) vereinigt sind, welche mit diesen eine Aufnahme (15) definiert, **dadurch gekennzeichnet**, daß die Verschlußhülse aus einem synthetischem, wärmeschrumpfenden Werkstoff besteht und in geeignet zurückgezogen ist.

11. Gießform gemäß Anspruch 10, **dadurch gekennzeichnet**, daß die Verschlußhülse (14) zwischen den Gußdauerformen (10A, 10B) einen Rückziehbereich (21) umfaßt, und daß sie gleichzeitig an jedem ihrer Enden eine Krempe ausbildet, die sich an die Außenfläche des Randes (13A, 13B) der Gußdauerformen, (10A, 10B) anlegt.

12. Gießform gemäß einem der Anspüche 10-11, **dadurch gekennzeichnet**, daß die Verschlußhülse (14) aus einem Band (16) gebildet ist, das auf den Rand (13A, 13B) der Gußdauerformen (10A, 10B) gewickelt ist.

13. Gießform gemäß Anspruch 12, **dadurch gekennzeichnet**, daß die beiden Enden von dem Band, das die Verschlußhülse bildet, miteinander verbunden sind.

14. Gießform gemäß einem der Anspüche 10-11, **dadurch gekennzeichne**t, daß die Verschlußhülse (14) aus einem Rohrabschnitt gebildet ist.
